# EUROPÄISCHE PATENTSCHRIFT

(11) **EP 1 150 051 B1**
(45) Veröffentlichungstag und Bekanntmachung des Hinweises auf die Patenterteilung: **15.09.2004**
(21) Anmeldenummer: 01107363.2
(22) Anmeldetag: 26.03.2001
(51) Int. Cl.: F16K 17/04

(54) **Sicherheitsventil**
Safety valve
Soupape de sécurité

(30) Priorität: 26.04.2000 DE 20007544 U
(43) Veröffentlichungstag der Anmeldung: 31.10.2001
(73) Patentinhaber: ARI-ARMATUREN ALBERT RICHTER GmbH & Co.KG., 33758 Schloss Holte-Stukenbrock (DE)
(72) Erfinder: Ashton, Volker, 33758 Schloss Holte- Stukenbrock (DE)
(74) Vertreter: Dantz, Jan Henning

(56) Entgegenhaltungen:
- DE-U- 9 313 579
- GB-A- 723 700
- GB-A- 766 637
- GB-A- 1 130 930
- US-A- 2 238 387
- US-A- 3 942 760

## Beschreibung

Die vorliegende Erfindung betrifft ein Sicherheitsventil gemäß dem Oberbegriff des Anspruchs 1.

Ein Sicherheitsventil mit den im Oberbegriff von Anspruch 1 definierten Merkmalen ist aus der DE-U-93 13 579 bekannt.

Derartige Sicherheitsventile finden beispielsweise als Überdruckventile im Anlagenbau Verwendung. Dabei besteht eine Forderung darin, die Funktionsfähigkeit überprüfen zu können, d. h., die Gängigkeit der Spindel mit dem angeschlossenen Ventilkegel.

Hierzu ist endseitig ein Zugknopf, z.B. in Form eines Knebels oder eines Hebels angeschlossen, wobei er mit einem Kupplungsstück verbunden ist. das wiederum im wesentlichen verdrehsicher an der Spindel befestigt ist.

Die Verbindung des Zugknopfes mit dem Kupplungsstück erfolgt mittels eines Spannstiftes, der sowohl das Kupplungsstück durchtritt als auch die sich gegenüberliegenden Wandungen des Zugknopfes, wodurch sich ebenfalls eine Verdrehsicherung ergibt.

Aufgrund von Fehlbedienungen, die dazu führen, daß der Zugknopf zum Anlüften statt gezogen gedreht wird, kann es zu Beschädigungen der Sitzfläche des Ventilkegels kommen mit der Folge, daß Undichtigkeiten auftreten.

Neben der dadurch gegebenen Einschränkung der Funktionsfähigkeit sind auch die damit verbundenen relativ hohen Betriebskosten zu beklagen, die durch ein häufig erforderliches Ersetzen des Sicherheitsventils entstehen.

Der vorliegenden Erfindung liegt daher die Aufgabe zugrunde, ein Sicherheitsventil der gattungsgemäßen Art so weiter zu entwickeln, daß auftretende Fehlbedienungen des Zugknopfes ohne Auswirkungen auf die Funktionsfähigkeit des Sicherheitsventiles bleiben.

Diese Aufgabe wird durch ein Sicherheitsventil gelöst, das die Merkmale des Anspruchs 1 aufweist.

Durch die freie Verdrehbarkeit des Zugknopfes gegenüber der Spindel wird verhindert, daß bei einer Fehlbedienung, also dann, wenn der Zugknopf unsachgemäß gedreht wird, die Spindel ebenfalls gedreht wird mit den beschriebenen Folgen. Trotzdem bleibt die Möglichkeit der axialen Verschiebbarkeit der Spindel uneingeschränkt erhalten.

Die freie Verdrehmöglichkeit des Zugknopfes kann dadurch erreicht werden, daß dieser frei drehbar auf dem Kupplungsstück gelagert ist. Denkbar ist aber auch, das Kupplungsstück selbst frei drehbar mit der Spindel zu verbinden und den Zugknopf dem Kupplungsstück gegenüber verdrehsicher zu halten.

Bei Verzicht auf ein Kupplungsstück kann der Zugknopf frei drehbar direkt an der Spindel festgelegt sein.

Nach einem vorteilhaften Gedanken der Erfindung ist vorgesehen, den Zugknopf unterseitig mit einem inneren Ansatz zu versehen, an dem sich der innen liegende, das Kupplungsstück durchtretende Spannstift mit seinen beiden aus dem Kupplungsstück heraustretenden Enden abstützt. Dabei ist das zugeordnete Außenmaß, üblicherweise der Durchmesser des Kupplungsstückes, in diesem Bereich kleiner als das lichte Maß der Aufnahme des Zugknopfes, in die das Kupplungsstück eingesteckt ist. Der Spannstift durchtritt ausschließlich das Kupplungsstück, nicht jedoch, wie im Stand der Technik, die Wandungen des Zugknopfes. Dieser kann von daher problemlos um das Kupplungsstück gedreht werden.

Nach einem weiteren Gedanken der Erfindung ist vorgesehen, auf dem Kupplungsstück eine Druckfeder zu führen, die sich einerseits daran und andererseits an einem Gehäuseteil, beispielsweise einer Kappe des Sicherheitsventiles abstützt. Hierdurch ist gewährleistet, daß der Zugknopf nach einem Anlüften, d. h. nach einem Ziehen, wieder in seine Ursprungsposition zurückgedrückt wird.

Ferner ist vorgesehen, das Kupplungsstück im Verbindungsbereich mit der Spindel mit axial zu dieser verlaufenden Langlöchern zu versehen, und zwar an zwei sich gegenüber liegenden Seiten, in denen ein quer eingelassener Sicherungsstift, der die Spindel durchtritt und durch den diese mit dem Kupplungsstück verbunden ist, mit seinen beiden Enden geführt ist.

Bekannt ist es, das Kupplungsstück in diesem Bereich mit Bohrungen zu versehen, die im Durchmesser größer sind als der Sicherungsstift. Allerdings liegt vielfach dieser Sicherungsstift an der Wandung dieser Bohrungen an, so daß beim Ziehen des Zugknopfes und mit ihm der Spindel dieser über einen gewissen Bereich eine Drehbewegung vollführt, die durch die Krümmung der Bohrungswandung bedingt ist.

Durch die Weiterentwicklung der Erfindung im vorgenannten Sinn wird diese Drehbewegung ausgeschlossen. Vielmehr ist eine exakte axiale Führung gegeben, wobei wichtig ist, daß die Spindel im Funktionsfall, also wenn ein Überdruck im Leitungssystem auftritt und das Sicherheitsventil sich öffnet, eine unbehinderte axiale Bewegung der Spindel möglich ist, die bei der bekannten Konstruktion so nicht gewährleistet ist.

Insgesamt bietet das neue Sicherheitsventil gegenüber den bekannten erhebliche Vorteile, was die Betriebssicherheit und die Standzeit betrifft.

Weitere vorteilhafte Ausbildungen der Erfindung sind in den Unteransprüchen gekennzeichnet.

Ein Ausführungsbeispiel der Erfindung wird nachfolgend anhand der beigefügten Zeichnungen beschrieben.

Es zeigen:
- Figur 1: ein erfindungsgemäßes Sicherheitsventil in einem Längsschnitt,
- Figur 2: einen Teilschnitt durch das Sicherheitsventil entsprechend der Linie II-II in Figur 1.

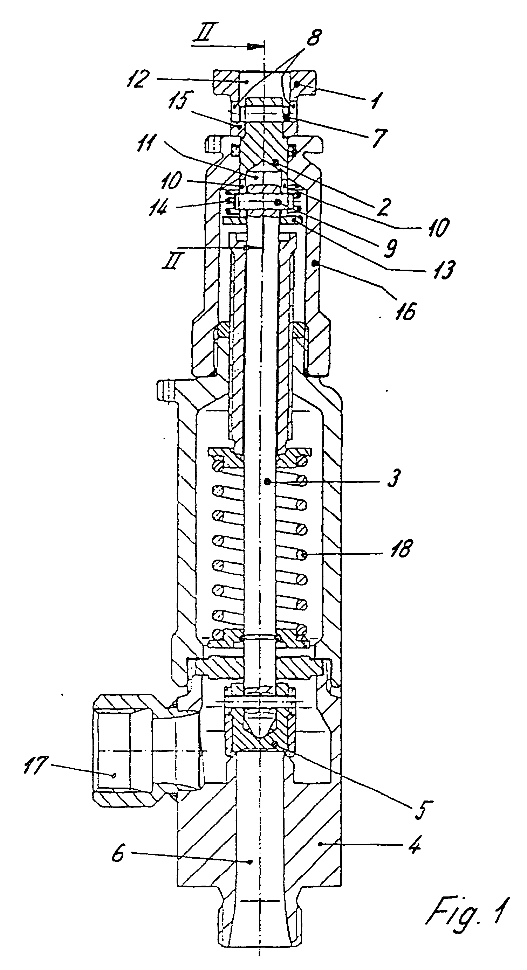

In der Figur 1 ist ein Sicherheitsventil dargestellt, das ein mit einem Einlaß 6 und einem Auslaß 17 versehenes Gehäuse 4 aufweist. Der Einlaß 6 ist im Normalfall mit einem Ventilkegel 5 verschlossen, der wiederum an einer druckfederbelasteten Spindel 3 befestigt ist, die axial verschiebbar gelagert ist.

Im Funktionsfall wird durch einen vorhandenen Überdruck der Ventilkegel 5 unter Mitnahme der Spindel 3 axial bewegt, wobei der Einlaß 6 geöffnet wird und das unter Druck stehende Medium aus dem Auslaß 17 entweicht, bis sich ein Normaldruck einstellt, der dem Druck der Feder 18 entspricht, durch den der Ventilkegel 5 in seine Schließstellung verschoben wird.

Am anderen Ende der Spindel 3 ist ein Kupplungsstück 2 weitgehend verdrehsicher befestigt, das andererseits mit einem Zugknopf 1 verbunden ist, und zwar derart, daß der Zugknopf 1 gegenüber dem Kupplungsstück 2 frei drehbar ist.
Das als zylindrisches Teil ausgebildete Kupplungsstück 2 weist eine axiale Sackbohrung 11 auf, in der die Spindel 3 geführt ist. In den sich gegenüber liegenden Wandungen der Sackbohrung 11 sind axial sich erstreckende Langlöcher 10 vorgesehen, in denen ein Sicherungsstift 9 im Bereich seiner beiden Enden geführt ist, der im übrigen die Spindel 3 durchtritt. Bei einem axialen Verschieben der Spindel 3 aufgrund eines Überdrucks wird diese in der Sackbohrung 11 bewegt, ohne Mitnahme des Kupplungsstückes 2, jedoch geführt durch das Zusammenwirken des Sicherungsstiftes 9 und der Langlöcher 10.

An dem dem Zugknopf 1 abgewandten Ende weist das Kupplungsstück 2 einen Kragen 13 auf, an dem eine Druckfeder 14 anliegt, die sich andererseits an einem inneren Teil einer Kappe 16 abstützt, die das Kupplungsstück 2 im wesentlichen und die Spindel 3 teilweise umhüllt. Gleichzeitig liegt der Zugknopf 1 mit einer Stirnseite an der zugewandten Stirnseite der Kappe 16 an.

Die dieser zugewandte Stirnseite des Zugknopfes 1 weist einen sich nach innen erstreckenden Ansatz 15 auf, der die Auflage für einen Spannstift 7 bildet, der quer durch das Kupplungsstück 2 geführt ist.

Dabei ist die Länge des Spannstiftes 7 geringfügig kleiner als die zugeordnete lichte Weite einer Aufnahme 12 des Zugknopfes 1.

Zur Montage des Spannstiftes 7 sind in den gegenüber liegenden Wänden des Zugknopfes 1 Bohrungen 8 vorgesehen, durch die der Spannstift in das Kupplungsstück 2 eintreibbar ist.

Zum Anlüften des Sicherheitsventils wird der Zugknopf 1 gegen den Druck der Druckfeder 14 unter gleichzeitiger Mitnahme des Kupplungsstückes 2 und der daran angeschlossenen Spindel 3 gezogen. Dabei wird die Spindel 3 erst dann axial bewegt, wenn der Sicherungsstift 9 im unteren Endbereich der Langlöcher 10 liegt.

Nach einem Loslassen des Zugknopfes 1 werden dieser und das Kupplungsstück 2 unter Wirkung der Druckfeder 14 in eine Endposition gebracht, in der gleichzeitig der Ventilkegel 5 durch federbelastetes Betätigen der Spindel 3 in Schließstellung steht.

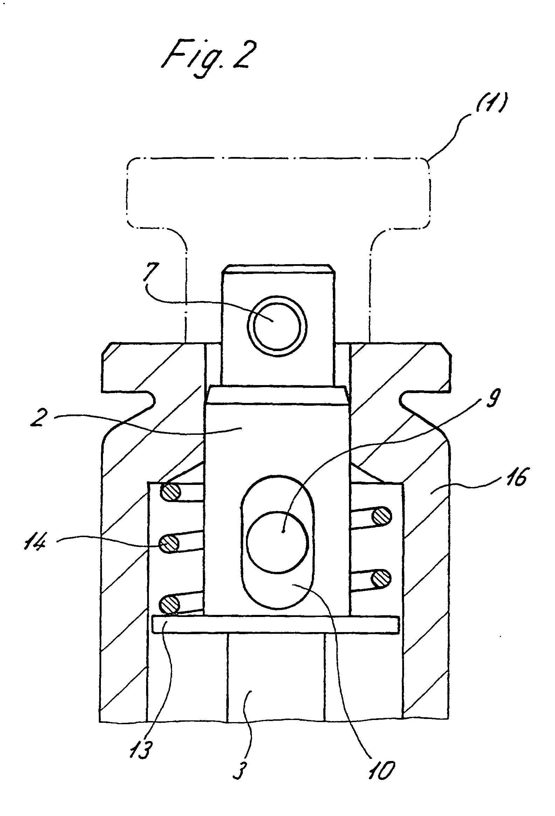

Wie besonders deutlich die Figur 2 wiedergibt, entspricht die Breite der Langlöcher 10 etwa dem Durchmesser des Sicherungsstiftes 9, so daß sich eine recht gute axiale Führung der Spindel für den Fall ergibt, daß diese sich relativ zum Kupplungsstück 2 axial verschiebt.

## Patentansprüche

1. Sicherheitsventil mit einem einen Einlaß (6) verschließenden, mittels einer axial bewegbaren Spindel (3) betätigbaren Ventilkegel (5) und einem am anderen Ende der Spindel (3) mittelbar oder unmittelbar angeschlossenen Zugknopf (1), mit dem die Spindel (3) betätigbar ist, **dadurch gekennzeichnet, daß** der Zugknopf (1) gegenüber der Spindel (3) frei drehbar gelagert ist.

2. Sicherheitsventil nach Anspruch 1, bei dem der Zugknopf (1) über ein Kupplungsstück (2) an der Spindel (3) befestigt ist, **dadurch gekennzeichnet, daß** das Kupplungsstück (2) verdrehsicher mit der Spindel (3) und der Zugknopf (1) frei drehbar an dem Kupplungsstück (2) befestigt ist.

3. Sicherheitsventil nach dem Oberbegriff des Anspruchs 2. **dadurch gekennzeichnet, daß** das Kupplungsstück (2) frei drehbar mit der Spindel (3) und frei drehbar oder verdrehsicher mit dem Zugknopf (1) verbunden ist.

4. Sicherheitsventil nach Anspruch 2, **dadurch gekennzeichnet, daß** der Zugknopf (1) an seinem der Spindel (3) zugewandten Endbereich einen sich nach innen erstreckenden Ansatz (15) aufweist, dem ein durch das Kupplungsstück (2) geführter Spannstift (7) anliegt, wobei die Länge des Spannstiftes (7) geringer ist als das zugeordnete lichte Abmaß einer Aufnahme (12) des Zugknopfes (1), in die das Kupplungsstück (2) eingesteckt ist.

5. Sicherheitsventil nach Anspruch 2, **dadurch gekennzeichnet, daß** das Kupplungsstück (2) über eine Druckfeder (14) in eine entgegen der Ziehrichtung untere Endstellung bringbar ist.

6. Sicherheitsventil nach Anspruch 5, **dadurch gekennzeichnet, daß** das Kupplungsstück (2) auf seiner dem Zugknopf (1) abgewandten Seite einen umlaufenden Kragen (13) aufweist, an dem sich die Druckfeder (14) einerseits abstützt und andererseits an einem Gehäuseteil des Sicherheitsventils.

7. Sicherheitsventil nach Anspruch 2, **dadurch gekennzeichnet, daß** das Kupplungsstück (2) im Verbindungsbereich mit der Spindel (3) in den sich gegenüber liegenden Wandungen einer die Spindel (3) aufnehmenden Sackbohrung (11) mit Langlöchern (10) versehen ist, die sich axial erstrecken und in denen ein Sicherungsstift (9) geführt ist, der quer zur Längsachse der Spindel (3) in dieser befestigt ist.

8. Sicherheitsventil nach Anspruch 7, **dadurch gekennzeichnet, daß** die Breite der Langlöcher (10) etwa dem Durchmesser des Sicherungsstiftes (9) entspricht.

## Revendications

1. Soupape de sécurité avec un cône de soupape (5) obturant une admission (6), actionné à l'aide d'une tige (3) mobile axialement et un bouton de traction (1), relié directement ou indirectement à une autre extrémité de la tige (3), à l'aide duquel la tige (3) est actionnée, **caractérisée en ce que** le bouton de traction (1) est logé de manière rotative par rapport à la tige (3).

2. Soupape de sécurité selon la revendication 1, dans laquelle le bouton de traction (1) est fixé à la tige (3) par l'intermédiaire d'un élément de couplage (2), **caractérisée en ce que** l'élément de couplage (2) est fixé de manière anti-rotative à la tige (3) et le bouton de traction (1) est fixé de manière rotative à l'élément de couplage (2).

3. Soupape de sécurité selon le concept principal de la revendication 2, **caractérisée en ce que** l'élément de couplage (2) est relié de manière rotative avec la tige (3) et de manière rotative ou anti-rotative avec la bouton de traction (1).

4. Soupape de sécurité selon la revendication 2, **caractérisée en ce que** le bouton de traction (1) comprend, au niveau de son extrémité orientée vers la tige (3), un prolongement (15) s'étendant vers l'intérieur, sur lequel s'appuie une goupille de serrage (7) guidée par l'élément de couplage (2), la longueur de la goupille de serrage (7) étant inférieure à la dimension de dégagement correspondante d'un logement (12) du bouton de traction (1), dans lequel l'élément de couplage (2) est emboîté.

5. Soupape de sécurité selon la revendication 2, **caractérisée en ce que** l'élément de couplage (2) peut être amené dans une position finale inférieure opposée à la direction de traction à l'aide d'un ressort de compression (14).

6. Soupape de sécurité selon la revendication 5, **caractérisée en ce que** l'élément de couplage (2) comprend, du côté opposé au bouton de traction (1), un collet circulaire (13), sur lequel le ressort de compression (14) s'appuie, et celui-ci s'appuie d'autre part sur une partie du boîtier de la soupape de sécurité.

7. Soupape de sécurité selon la revendication 2, **caractérisée en ce que** l'élément de couplage (2) est muni, dans la partie de raccordement avec la tige (3), au niveau des parois opposées d'un alésage borgne (11) logeant la tige (3), de trous oblongs (10) qui s'étendent dans la direction axiale et dans lesquels une goupille de sécurité (9) est guidée et fixée perpendiculairement à l'axe longitudinal de la tige (3) dans celle-ci.

8. Soupape de sécurité selon la revendication 7, **caractérisée en ce que** la largeur des trous oblongs (10) correspond approximativement au diamètre de la goupille de sécurité (9).

## Claims

1. Safety valve having a valve cone (5) which closes an inlet (6) and can be actuated by means of an axially movable spindle (3), and having a pull knob (1) which is attached indirectly or directly to the other end of the spindle (3) and with which the spindle (3) can be actuated, **characterized in that** the pull knob (1) is mounted in a freely rotatable manner relative to the spindle (3).

2. Safety valve according to Claim 1, in which the pull knob (1) is fastened to the spindle (3) via a coupling piece (2), **characterized in that** the coupling piece (2) is fastened to the spindle (3) in a rotationally locked manner and the pull knob (1) is fastened to the coupling piece (2) in a freely rotatable manner.

3. Safety valve according to the preamble of Claim 2, **characterized in that** the coupling piece (2) is connected to the spindle (3) in a freely rotatable manner and is connected to the pull knob (1) in a freely rotatable or rotationally locked manner.

4. Safety valve according to Claim 2, **characterized in that** the pull knob (1), at its end region facing the spindle (3), has an inwardly extending shoulder (15), against which a clamping pin (7) passed through the coupling piece (2) bears, the length of the clamping pin (7) being smaller than the associated clear dimension of a receptacle (12) of the pull knob (1), into which receptacle (12) the coupling piece (2) is inserted.

5. Safety valve according to Claim 2, **characterized in that** the coupling piece (2) can be brought via a compression spring (14) into a bottom end position in opposition to the pulling direction.

6. Safety valve according to Claim 5, **characterized in that** the coupling piece (2), on its side remote from the pull knob (1), has an encircling collar (13), the compression spring (14) being supported on this collar (13) on the one hand and on a housing part of the safety valve on the other hand.

7. Safety valve according to Claim 2, **characterized in that** the coupling piece (2), in the region connected to the spindle (3), is provided with axially extending elongated holes (10) in the opposite walls of a blind bore (11) accommodating the spindle (3), in which elongated holes (10) a locking pin (9) which is fastened in the spindle (3) transversely to the longitudinal axis of the latter is guided.

8. Safety valve according to Claim 7, **characterized in that** the width of the elongated holes (10) corresponds approximately to the diameter of the locking pin (9).
